# EUROPÄISCHE PATENTANMELDUNG

(11) **EP 1 977 939 A2**
(43) Veröffentlichungstag der Anmeldung: **08.10.2008**
(21) Anmeldenummer: 08004229.4
(22) Anmeldetag: 07.03.2008
(51) Int. Cl.: B60R 25/04, E05B 65/12

(54) **System zum schlüssellosen Öffnen eines Kraftfahrzeugs und ein entsprechendes Verfahren**

(30) Priorität: 02.04.2007 DE 102007015869
(71) Anmelder: GM Global Technology Operations, Inc., Detroit, MI 48265-3000 (US)
(72) Erfinder: Bonne, Uwe, 65830 Kriftel (DE)
(74) Vertreter: Strauss, Peter

(57) **Zusammenfassung**

Ein System zum schlüssellosen Öffnen eines Kraftfahrzeugs (1) umfasst ein mit einer Steuerungseinrichtung (5) ausgestattetes Kraftfahrzeug (1) und eine mit einem Telefon anrufbare Zentralstelle (3), wobei die Zentralstelle (3) drahtlos eine Nachricht an das zu öffnende Kraftfahrzeug (1) übermittelt und die Steuerungseinrichtung (5) im Kraftfahrzeug nach Empfang der Nachricht das Kraftfahrzeug (1) entriegelt und einen Startvorgang ermöglicht.

## Beschreibung

Die Erfindung bezieht sich auf ein System zum schlüssellosen Öffnen eines Kraftfahrzeugs und auf ein Verfahren zum schlüssellosen Öffnen eines Kraftfahrzeugs.

Kraftfahrzeuge verfügen üblicherweise über eine Zentralverriegelung, die beispielsweise von einer zentralen Steuerungseinrichtung des Kraftfahrzeugs angesteuert werden kann. Moderne Zentralverriegelungen werden mit einer Funk- oder Infrarot-Fernbedienung geöffnet und geschlossen, ohne dass das Einführen eines Schlüssels in ein Schloss in einer Fahrzeugtür oder Fahrzeugklappe notwendig ist. Weiterhin ist es bekannt, dass ein berechtigter Nutzer des Kraftfahrzeugs einen Transponder mit sich führt, um so bei Annäherung an das Kraftfahrzeug eine selbsttätige Entriegelung der Zentralverriegelung auszulösen. Gegebenenfalls kann mit dem Transponder auch der Start des Kraftfahrzeugmotors vorbereitet werden.

Zur weiteren Komforterhöhung ist es aus der DE 103 04 243 A1 bekannt, über ein Mobiltelefon unmittelbar eine Steuerungseinheit im Kraftfahrzeug anzurufen und eine Aufforderungsnachricht an diese Steuerungseinheit zu übermitteln. Entsprechend der Aufforderungsnachricht kann unter anderem eine Zentralverriegelung des Kraftfahrzeugs geöffnet werden. Somit ist das Mitführen eines Fahrzeugschlüssels nicht mehr notwendig.

Weiterhin beschreibt die US 2006/0143463 A1 ein schlüsselloses Zugangssystem für Kraftfahrzeuge, bei dem über ein Mobiltelefon eine Empfangseinheit im Kraftfahrzeug angerufen werden kann und nach Übermittlung einer Identifizierung das Kraftfahrzeug entriegelt wird. Ein gleichartiges System ist aus der JP 2006/14259 A bekannt. Schließlich offenbart die JP 2005/226439 A ein weiteres schlüsselloses Zugangssystem, das aber das Vorhandensein eines zusätzlichen Servicetechnikers erfordert, wodurch es insbesondere in der Nacht wenig praktikabel ist.

Bei den bekannten schlüssellosen Zugangssystemen zu einem Kraftfahrzeug erfolgt ein unmittelbarer Anruf an eine Empfangseinheit im Kraftfahrzeug selbst. Dadurch ist es nicht auszuschließen, dass sich eine unberechtigte Person beispielsweise des Mobiltelefons bemächtigt, die eingespeicherte Nummer anwählt und das Kraftfahrzeug entwenden kann.

Es ist Aufgabe der Erfindung, ein System zum schlüssellosen Öffnen eines Kraftfahrzeugs und ein entsprechendes Verfahren anzugeben, mit dennen die Diebstahlsicherheit zuverlässig erhöht ist.

Erfindungsgemäß wird die Aufgabe dadurch gelöst, dass eine Zentralstelle, die mit einem Telefon angerufen wird, drahtlos eine Nachricht an das zu öffnende Kraftfahrzeug übermittelt und die Steuerungseinrichtung im Kraftfahrzeug nach Empfang der Nachricht das Kraftfahrzeug entriegelt und einen Startvorgang ermöglicht.

Bei einem derartigen System erfolgt kein Anruf unmittelbar in oder an das Kraftfahrzeug selbst, sondern zuerst an eine Zentralstelle, beispielsweise eine Servicezentrale des Kraftfahrzeugherstellers. Selbstverständlich kann sowohl mit Mobiltelefonen als auch mit Festsnetzanschlüssen dort angerufen werden. Hat sich die Zentralstelle, beispielsweise wie im Folgenden beschrieben, von der Identität des Anrufers überzeugt, so übermittelt diese eine Nachricht an das Kraftfahrzeug übermitteln, die mit geeigneten Empfangseinrichtungen im Kraftfahrzeug empfangen wird. Die Nachricht wird an eine Steuerungseinrichtung, beispielsweise ein zentrales Steuergerät, des Kraftfahrzeugs weitergeleitet und dieses dementsprechend dazu veranlasst, die Verriegelung der Zentralverriegelung des Kraftfahrzeugs aufzuheben, so dass der Nutzer einsteigen kann. Beispielsweise kann eine solche Nachricht an das Kraftfahrzeug ebenfalls über den GSM-Standard der Mobiltelefone übermittelt werden. Es sind aber auch alle anderen Arten drahtloser Datenübertragung möglich.

Vorzugsweise ist eine solche anrufbare Zentralstelle automatisiert, d.h. eingehende Anrufe lösen selbsttätig das Übermitteln der entsprechenden Nachricht an das Kraftfahrzeug aus. Gegebenenfalls kann auch eine sprachgesteuerte Menüauswahl erfolgen. Hierzu kann einem Kraftfahrzeug, z.B. vom Hersteller, eine Kodierung zugeordnet werden, wobei nach Eingang des Anrufes die Nachricht von der Zentralstelle an das bestimmte Kraftfahrzeug übermittelt wird, um nur das Entriegeln der Zentralverriegelung dieses speziellen Kraftfahrzeugs auszulösen. Weiterhin wird das Kraftfahrzeug von der Steuerungseinrichtung derart angesteuert, dass nach dem Öffnen einer Fahrzeugtür das Starten des Kraftfahrzeugs ermöglicht wird. Beispielsweise kann auch eine Innenraumbeleuchtung zumindest kurzzeitig aktiviert werden. Gegebenenfalls kann der Startvorgang auch selbsttätig erfolgen, wenn kein Schlüssel für das Zündschloss vorhanden ist.

Der Vorteil der Erfindung besteht darin, dass auch bei einem verlorenen oder vergessenen Schlüssel das Kraftfahrzeug schlüssellos geöffnet werden kann. Durch die Zwischenschaltung einer Zentralstelle ist zudem ein Missbrauch praktisch ausgeschlossen. Insbesondere durch eine nachfolgend beschriebene Autorisierung kann kein Unberechtigter bei der Zentralstelle anrufen und das Öffnen des Kraftfahrzeugs auslösen.

Nach einer Ausgestaltung ist eine Autorisierung zur Identifikation des Anrufes durchführbar. Hierzu kann vom Anrufer beispielsweise ein Zahlencode, entsprechend dem Pin einer Bankcard oder dergleichen, über die Tastatur eines Telefons eingegeben werden, der vorzugsweise selbsttätig in der Zentralstelle überprüft wird. In gleicher Weise kann eine Sprachkontrolle erfolgen bzw. das Kraftfahrzeug nur dann geöffnet werden, wenn ein Passwort übermittelt wird.

Um das Öffnen des Kraftfahrzeugs einzuleiten, kann nach einer Weiterbildung das Kraftfahrzeug vor dem eigentlichen Öffnen bzw. Entriegeln der Zentralverriegelung aktiviert werden. Hierzu kann beispielsweise ein Griff an der Fahrertür gezogen werden, um unter anderem die Empfangseinrichtung zu aktivieren und/oder eine Innenbeleuchtung einzuschalten. Ebenso kann eine Annäherung an das Kraftfahrzeug selbsttätig durch einen Transponder, den der Nutzer mit sich führt, festgestellt und das Kraftfahrzeug auf das Entriegeln vorbereitet werden. Gegebenenfalls kann von der Zentralstelle auch abgefragt werden, ob sich der Anrufer tatsächlich in unmittelbarer Nähe des Kraftfahrzeugs befindet, um zu vermeiden, dass er bei der Zentralstelle anruft und das Kraftfahrzeug geöffnet wird, wenn der Anrufer sich noch weit vom Fahrzeug entfernt befindet, damit dieses nicht entwendet werden kann.

Hat der Nutzer im Kraftfahrzeug Platz genommen, kann er den Motor schlüssellos starten. Hierzu kann entweder ein erneuter Anruf mit nachfolgender Übermittlung einer entsprechenden Nachricht an das Kraftfahrzeug erfolgen, oder es werden ein oder mehrere Bedienelemente in vorgegebener Weise betätigt, um diese bestimmte Funktionalität zu erfüllen. Ebenso kann über eine Tastatur oder eine sonstige Bedieneinheit ein Code oder dergleichen eingegeben werden, um zum einen erneut die Autorisierung nachzuweisen und zum anderen den Motor zu starten.

Schließlich wird zweckmäßigerweise eine aufgrund der empfangenen Nachricht entriegelte Zentralverriegelung nach einem insbesondere einstellbaren Zeitraum wieder verriegelt, um eine missbräuchliche Nutzung des Kraftfahrzeugs zu unterbinden. Falls der Anrufer nicht innerhalb der Zeitspanne eingestiegen und beispielsweise den Motor des Kraftfahrzeugs gestartet hat, muss er nach der erneuten Verriegelung einen erneuten Anruf bei der Zentralstelle tätigen. Die Steuerungseinrichtung kann dabei derart ausgelegt sein, dass auch nur innerhalb dieser Zeitspanne der Motor gestartet werden kann, wodurch der Fahrer zwar im Kraftfahrzeug sitzt, wenn er allerdings den Motor nicht rechtzeitig gestartet hat, dieser sich auch nicht mehr starten lässt, ohne einen erneute Anruf bei der Zentralstelle.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

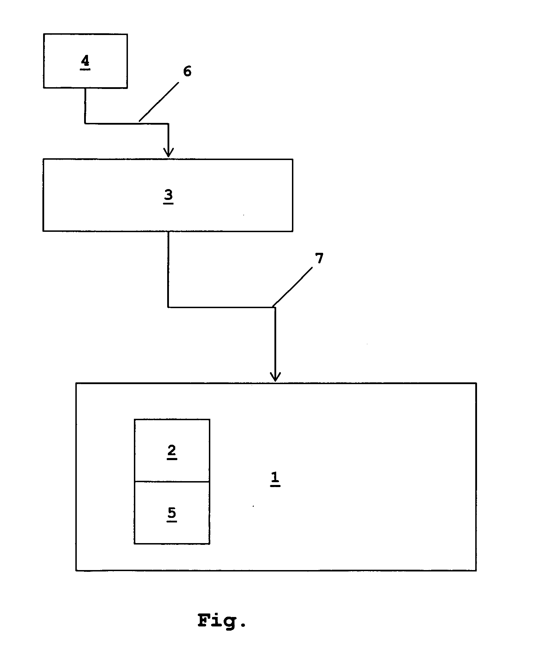

Die Erfindung wird im Folgenden anhand eines Ausführungsbeispiels mit Bezugnahme auf die Zeichnung näher erläutert. Die einzige Fig. der Zeichnung zeigt den schematischen Aufbau des erfindungsgemäßen Systems.

Bei dem System zum schlüssellosen Öffnen eines Kraftfahrzeugs 1 verfügt das Kraftfahrzeug 1 über eine Empfangseinrichtung 2, vorzugsweise nach dem GSM-Standard, um Nachrichten von einer Zentralstelle 3 zu empfangen. Die Zentralstelle 3 wird über ein Mobiltelefon 4 angerufen, wie durch den Pfeil 6 angedeutet. Ein solcher Anruf wird von einem Fahrzeugnutzer dann getätigt, wenn er seinen Fahrzeugschlüssel verloren oder vergessen hat und er das Kraftfahrzeug 1 anders nicht mehr öffnen kann. Selbstverständlich kann ein solcher Anruf gebührenpflichtig sein. In der vorzugsweise automatisierten Zentralstelle 3 wird der Anruf empfangen und insbesondere eine Autorisierung durchgeführt, d.h. es wird z.B. über die Eingabe eines Pin-Codes die Berechtigung des Anrufers zur Nutzung des Kraftfahrzeugs 1 überprüft. Ist eine solche Autorisierung erfolgt, wird von der Zentralstelle 3, wie durch den Pfeil 7 angedeutet, eine Nachricht an die Empfangseinrichtung 2 im Kraftfahrzeug übermittelt. Von der Empfangeinrichtung 2 wird die Nachricht an eine Steuerungseinrichtung 5, insbesondere ein Steuergerät, des Kraftfahrzeugs 1, weitergeleitet. Diese Steuerungseinrichtung 5 entriegelt nachfolgend eine Zentralverriegelung des Kraftfahrzeugs, so dass der Anrufer in das Kraftfahrzeug einsteigen kann. Zudem wird ein Startvorgang des Motors des Kraftfahrzeugs 1 ermöglicht, wodurch der Nutzer ohne Schlüssel das Kraftfahrzeug starten kann. Hierzu kann ein eigener Startknopf für den Motor vorgesehen sein. Gegebenenfalls kann auch ein selbsttätiger Startvorgang erfolgen, wenn kein Schlüssel zum Einstecken in das Zündschloss vorhanden ist.

### Bezugszeichenliste

- 1.: Kraftfahrzeug
- 2.: Empfangseinrichtung
- 3.: Zentralstelle
- 4.: Mobiltelefon
- 5.: Steuerungseinrichtung
- 6.: Pfeil
- 7.: Pfeil

## Patentansprüche

1. System zum schlüssellosen Öffnen eines Kraftfahrzeugs (1), umfassend ein mit einer Steuerungseinrichtung (5) ausgestattetes Kraftfahrzeug (1) und eine mit einem Telefon anrufbare Zentralstelle (3), wobei die Zentralstelle (3) drahtlos eine Nachricht an das zu öffnende Kraftfahrzeug (1) übermittelt und die Steuerungseinrichtung (5) im Kraftfahrzeug nach Empfang der Nachricht das Kraftfahrzeug (1) entriegelt und einen Startvorgang ermöglicht.

2. System nach Anspruch 1, **dadurch gekennzeichnet, dass** in der Zentralstelle (3) eine Autorisierung durchführbar ist.

3. System nach Anspruch 1 oder 2, **dadurch gekennzeichnet, dass** das Kraftfahrzeug (1) vor dem Empfang der Nachricht aktivierbar ist.

4. System nach einem der Ansprüche 1 bis 3, **dadurch gekennzeichnet, dass** ein Motor des Kraftfahrzeugs (1) startbar ist.

5. System nach einem der Ansprüche 1 bis 4, **dadurch gekennzeichnet, dass** das Kraftfahrzeug (1) insbesondere nach einer einstellbaren Zeitspanne deaktivierbar ist.

6. Verfahren zum schlüssellosen Öffnen eines Kraftfahrzeugs, umfassend die Schritte:
- Anrufen einer Zentralstelle mit einem Telefon,
- Drahtloses Übermitteln einer Nachricht an das zu öffnende Kraftfahrzeug,
- Empfangen der Nachricht mit einer Empfangseinrichtung (2) und Weiterleiten der Nachricht an eine Steuerungseinrichtung (5) im Kraftfahrzeug (1), und
- Entriegeln des Kraftfahrzeugs (1) und Ermöglichen eines Startvorgangs.

7. Verfahren nach Anspruch 6, **dadurch gekennzeichnet, dass** eine Autorisierung durchgeführt wird.

8. Verfahren nach Anspruch 6 oder 7, **dadurch gekennzeichnet, dass** das Kraftfahrzeug (1) vor dem Empfangen der Nachricht aktiviert wird.

9. Verfahren nach einem der Ansprüche 6 bis 8, **dadurch gekennzeichnet, dass** ein Motor des Kraftfahrzeugs (1) gestartet wird.

10. Verfahren nach einem der Ansprüche 6 bis 9, **dadurch gekennzeichnet, dass** das Kraftfahrzeug (1) insbesondere nach einer einstellbaren Zeitspanne deaktiviert wird.
